# EUROPEAN PATENT APPLICATION

(11) **EP 1 587 285 A1**
(43) Date of publication of application: **19.10.2005**
(21) Application number: 04703924.3
(22) Date of filing: 21.01.2004
(51) Int. Cl.: H04M 1/05, H04R 1/00, H04R 1/10, H04R 25/02

(54) **EAR FIXED TYPE CONVERSATION DEVICE**

(30) Priority: 22.01.2003 JP 2003013068
(71) Applicant: Nec Tokin Corporation, Sendai-shi, Miyagi 982-8510 (JP)
(72) Inventor: TANAKA, Masatoshi, Toride-shi, Ibaraki 302-0034 (JP); FUJITA, Masahiko, Koganei-shi, Tokyo 184-0014 (JP); INAMURA, Yoshiaki, Moriya-shi, Ibaraki 302-0101 (JP)
(74) Representative: Vossius & Partner
(86) International application number: PCT/JP2004/000489
(87) International publication number: WO 2004/066599

(57) **Abstract**

An earset communication device capable of reliably suppressing transmission of microvibration to a microphone part. The earset communication device of the present invention is an earset communication device 1 attached to a human ear, which has a main body 2, a sound guide part 3 where a sound guide housing 3a protruding from the main body 2 is attached to the cavum conchae 61, and a microphone part 4 where a microphone housing 4a protruding from the main body 2 in continuously to the sound guide housing 3a in a fork shape is inserted into the cavum conchae in contact therewith. The main body 2 has a speaker 11. The sound guide part 3 has a sound guide tube 12 for guiding the sound output from the speaker 11 to the cavum conchae 61 in the sound guide housing 3a. The microphone part 4 has a bone conduction microphone 30 in the microphone housing 4a.

## Description

### Technical Field

The present invention relates to an earset communication device.

### Background Art

Conventional mobile voice communication devices using radio communication technology have been developed under the main theme of "providing communication opportunities anytime and anywhere necessary". Therefore, as shown in usage patterns of mobile phones and personal handy phone systems (PHS), mobile phones and PHS have a portable size allowing a user to put in a bag or pocket to carry. Further, as devices become smaller and portability increases, they come into wide use from certain users to general users.

Recently, fixed telephones at homes and offices have cordless terminals. Though users had to talk on the phone within a cable length range, they are now free from distance and able to talk in places far from the telephone. It also becomes possible to talk on the phone while moving freely in homes and offices. Thus, freedom in communication increases in home and office phones just like in mobile phones, improving user-friendliness.

Though conventional techniques have thus achieved improvement of distance freedom in mobile phones and PHS, no improvement has been made in calling style of holding a transmitter/receiver handset by hand to talk, which has been an issue from the start of development of phones. Therefore, there is a problem that actions during talking on the phone, such as taking notes and checking documents, are restricted. Not a few users would experience that they have difficulty doing such things smoothly during talking on the phone since only one hand is available.

The invention to solve the problem of unable to use both hands during talking on the phone, which is an object of handsfree, is proposed in Japanese Unexamined Patent Publication No. 10-304025, for example. It invents a device for talking on the phone without the need for user's hand by attaching a transmitter/receiver unit composed of a microphone and an earphone to the ear pinna. However, the transmitter/receiver unit of the communication device disclosed therein is connected to a main unit with a cable. It has thus a problem of taking time from receiving a call to answering the call, which is an object of easy attachment, since the following operation is required to start talking on the phone:
1. Take out a handsfree set and connect a connector
2. Attach the transmitter/receiver unit to a given position of the ear pinna
3. Talk

The invention to achieve the object of easy attachment is disclosed in Japanese Unexamined Patent Publication No. 2001-111680, for example. It discloses a technique to wirelessly connect a communication device and a mobile phone main body. This system eliminates the need for connecting a cable upon use and thus significantly improves usability compared to a conventional cable type.

However, since this technique requires to set a microphone part stably at the mouth of a user, a setting structure should be large. Further, it is technically difficult to achieve a support mechanism for stable setting.

Therefore, in order to set the microphone part stably at the user's mouth, the user needs to use both hands and takes time to attach it. Thus, a time delay occurs in the process of receiving a call signal, attaching a mechanism to set the microphone part to the user's mouth to the head, turning on a talk switch and starting talking. Smooth and easy attachment thereby remains unachieved.

Further, though the causal relationship and scale have not become clear, the effects of electromagnetic wave by radio communication equipment such as mobile phones are controversial domestically and internationally. Concerns exist about the effects of electromagnetic wave emitted from an antenna on body, particularly head, in communication equipment such as mobile phones using high frequency signals.

Recently, small communication devices in which a receiver/transceiver unit can be attached to the cavum conchae easily without the need for the user's hand are known. For example, in a communication device described in Japanese Unexamined Patent Publication No. 09-70087, an earphone and a microphone of a receiver/transceiver unit are mounted close to each other in the vicinity of an external package surface. Thus, microvibration in the earphone by a speaker is transmitted to the microphone, causing the microphone to be subject to the effect of the microvibration.

In order to reduce the effect of the microvibration on the microphone, the earphone and the microphone are mounted in a fork structure, for example. However, it is unable to suppress the microvibration transmitted to the microphone sufficiently, causing the problem that echo or the like occurs at the microphone to deteriorate calling quality.

As described in the foregoing, the conventional earset communication device has the problem that it is unable to suppress the microvibration transmitted from the earphone to the microphone sufficiently since the microphone and the earphone are mounted close to each other.

Further, the conventional earset communication device has the problem that it does not have a structure to reduce the effect of electromagnetic wave.

### Disclosure of the Invention

The present invention has been accomplished to solve the above problems, and a first object of the invention is thus to provide an earset communication device capable of reliably suppressing microvibration transmitted to a microphone. A second object of the invention is to provide an earset communication device capable of reducing the effect of electromagnetic wave.

According to an aspect of the invention, there is provided an earset communication device attached to a human ear, which includes a main body having a sound output unit (for example, a speaker 11 in the embodiment) outputting sound inside, a sound guide part protruding from the main body, attached to a cavum conchae of the ear, and guiding the sound output from the sound output unit to the cavum conchae, and a microphone part protruding from the main body, inserted into the cavum conchae in contact therewith, and having a bone conduction sound detection unit (for example, a bone conduction microphone 30 in the embodiment) detecting bone conduction sound transmitted to the cavum conchae. In this structure, it is possible to securely prevent microvibration generated by the sound from the sound output unit from being transmitted to the microphone part.

The microphone part may protrude from the main body in continuously to the sound guide part in a fork shape.

The sound guide part preferably has a sound guide tube guiding the sound output from the sound output unit to the cavum conchae. It is thereby possible to effectively guide the sound output from the sound output unit to the cavum conchae.

Further, the sound guide part preferably has a switch unit (for example, a switch lever 13 in the embodiment) switching a direction of a guiding path through which the sound guide tube guides the sound. It is thereby possible to easily switch the direction of the sound guiding path in accordance with which ear the device is attached to.

Furthermore, the sound guide part preferably has a fixing unit (for example, a fixing part 22 in the embodiment) fixing the direction of the guiding path. It is thereby possible to securely fix the sound guiding path and reliably prevent a change in the direction of the guiding path.

Further, the microphone part is preferably rotatably connected to the main part. It is thereby possible to more securely prevent microvibration from being transmitted to the microphone part.

The sound output unit is preferably fixed to a substrate (for example, a circuit substrate 6) where an electronic component (for example, a radio module 7, a battery 8, an antenna 9 and so on) is mounted. It is thereby possible to reduce microvibration generated by the sound output unit.

Particularly, if a battery is mounted to the substrate, it is possible to effectively reduce microvibration generated by the sound output unit.

In a preferred embodiment, the main body has a communication circuit and an antenna for radio communication with a separated base unit.

According to another aspect of the invention, there is provided an earset communication device attached to a human ear, which includes a main body, an earphone part protruding from the main body, attached to a cavum conchae of the ear, and outputting sound to the cavum conchae, and a microphone part protruding from the main body, inserted into the cavum conchae in contact therewith, and having a bone conduction sound detection unit detecting bone conduction sound transmitted to the cavum conchae, wherein the microphone part is rotatably connected to the main body. It is thereby possible to more securely prevent microvibration from being transmitted to the microphone part.

The microphone part may protrude from the main body in continuously to the earphone part in a fork shape.

It is further preferable to have a stopper restricting rotation of the microphone part.

According to another aspect of the invention, there is provided an earset communication device attached to a human ear, which includes a main body having an electronic circuit substrate (for example, a circuit substrate 6 of the embodiment) for radio communication, an earphone part protruding from the main body, attached to a cavum conchae of the ear, and outputting sound to the cavum conchae, and a microphone part protruding from the main body, inserted into the cavum conchae in contact therewith, and detecting bone conduction sound transmitted to the cavum conchae. Since this structure places the electronic circuit substrate which can generate electromagnetic wave in a position apart from a user's head, it is possible to reduce the effect of the electromagnetic wave.

It is preferred that the main body further has a battery supplying power to the electronic circuit substrate, and the battery is placed between the electronic circuit substrate and the user's head in a state where the communication device is attached to the user. The battery shields the electromagnetic wave generated in the electronic circuit substrate in this structure, and it is thereby possible to reduce the effect of the electromagnetic wave.

It is preferred that the main body further has a speaker, and the speaker is fixed to the electronic circuit substrate through attenuating material. The attenuating material absorbs microvibration generated in the speaker in this structure, and it is thereby possible to prevent the microvibration from being transmitted to another component, particularly to the microphone.

According to another aspect of the invention, there is provided an earset communication device attached to a human ear, which includes a main body having an antenna for radio communication, an earphone part protruding from the main body, attached to a cavum conchae of the ear, and outputting sound to the cavum conchae, and a microphone part protruding from the main body, inserted into the cavum conchae in contact therewith, and detecting bone conduction sound transmitted to the cavum conchae. Since this structure places the antenna which can generate electromagnetic wave in a position apart from a user's head, it is possible to reduce the effect of the electromagnetic wave.

In a preferred embodiment, the main body has a housing, and the antenna is placed in the housing located apart from a user's head in a state where the communication device is attached to the user.

It is preferred that the main body further has a battery, and the battery is placed between the antenna and a user's head in a state where the communication device is attached to the user. The battery shields the electromagnetic wave generated in the electronic circuit substrate in this structure, and it is thereby possible to reduce the effect of the electromagnetic wave.

The battery is preferably housed in a lower part of the main body in a state where the communication device is attached to a user. This structure lowers the center of gravity, and it is thereby possible to attach the communication device stably to the user. The user can thereby feel good fit.

### Brief Description of the Drawings

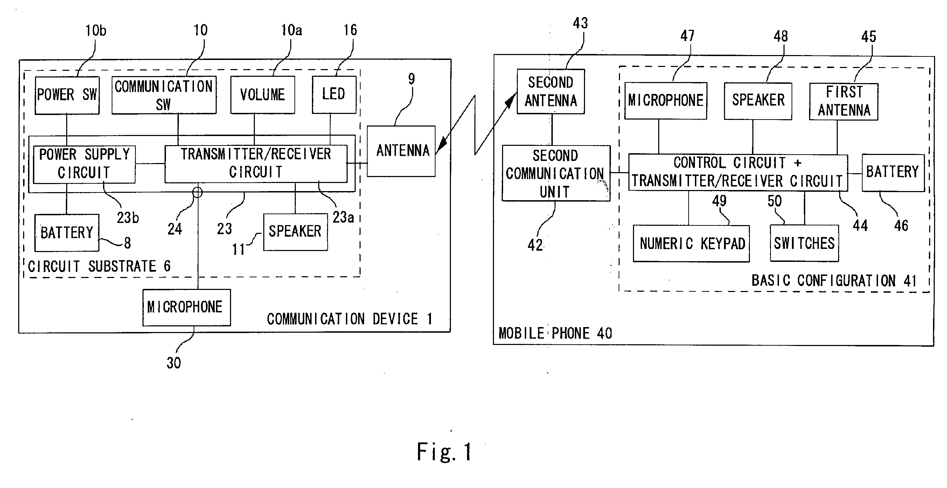

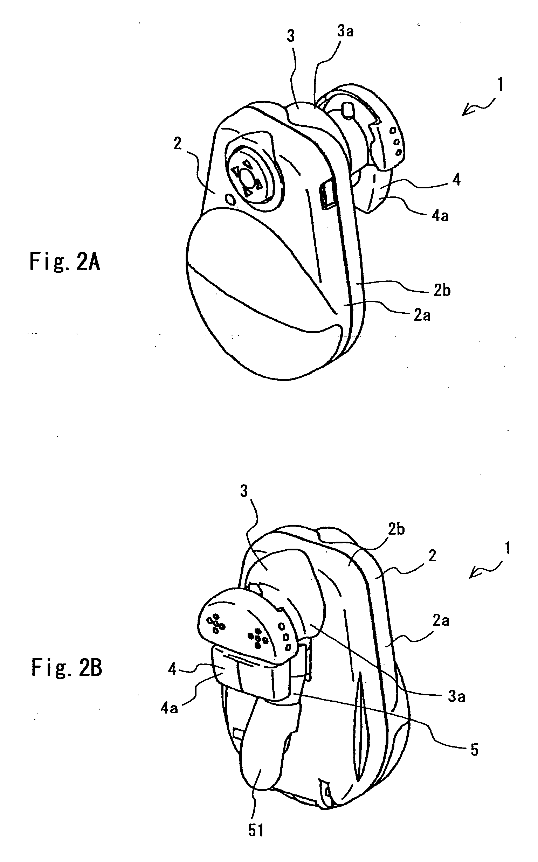

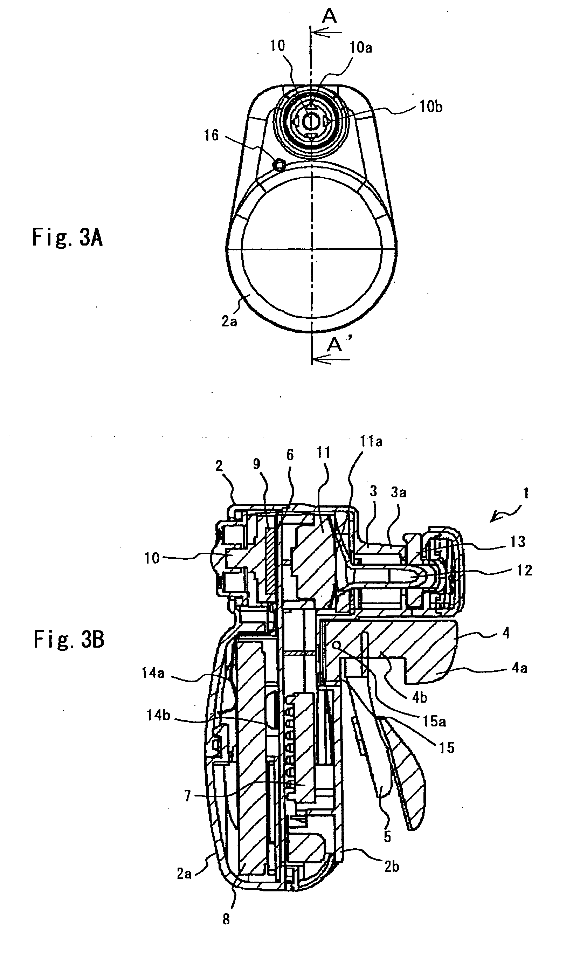

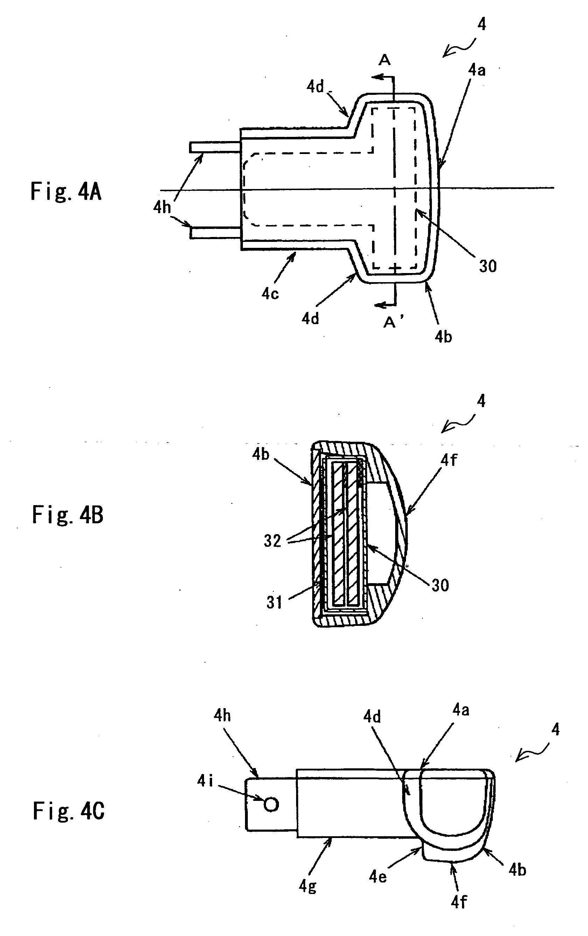

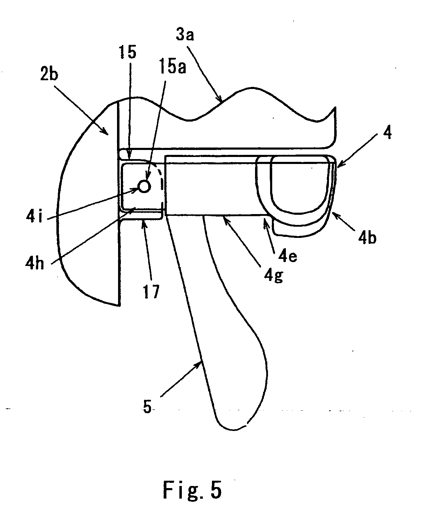

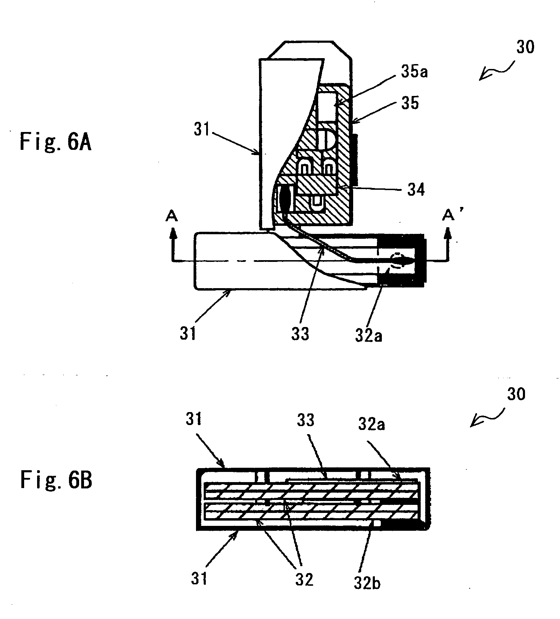

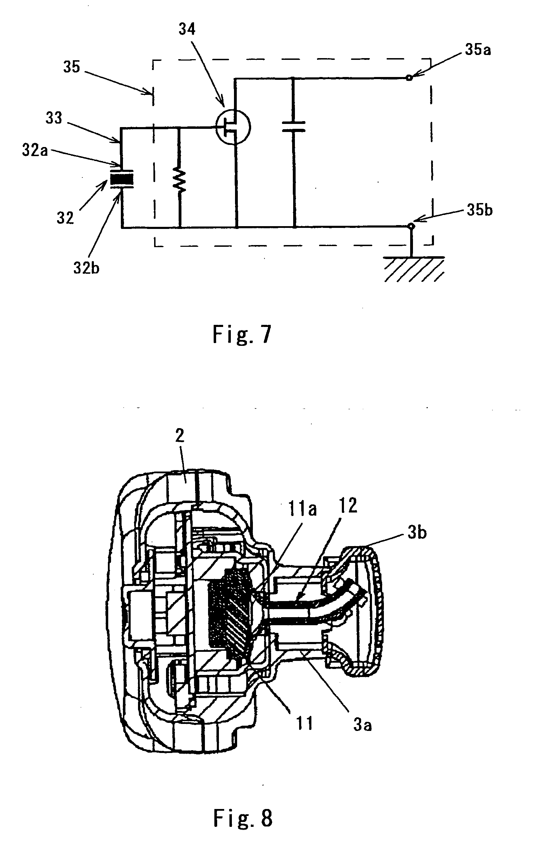

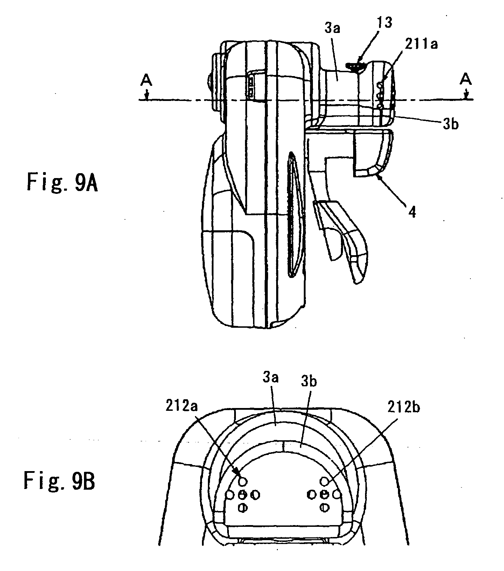

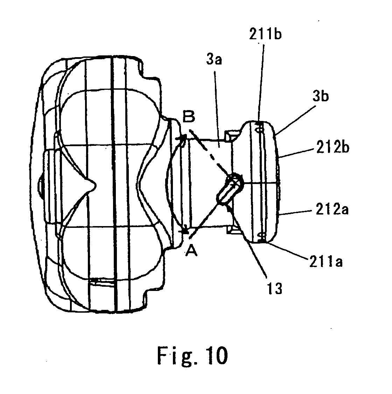

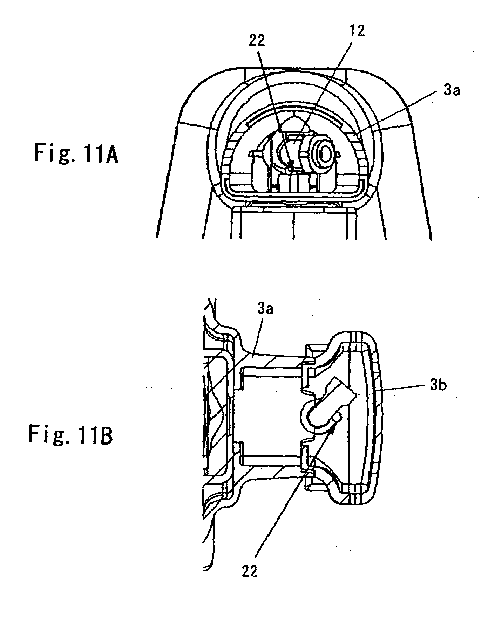

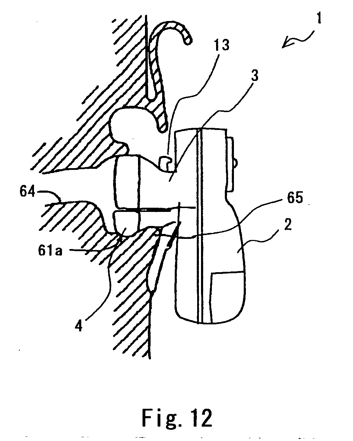

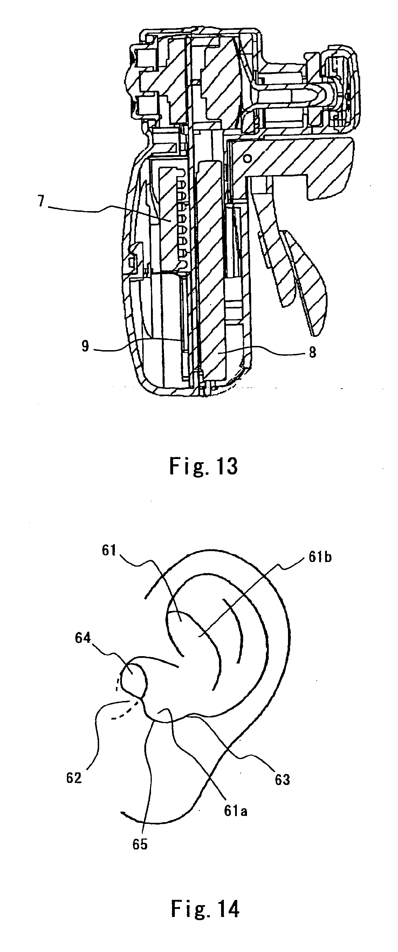

Fig. 1 is a block diagram showing communication using an earset communication device of the present invention; Figs. 2A and 2B are perspective views showing an earset communication device of the present invention; Fig. 3A is a front view showing an earset communication device of the present invention; Fig. 3B is a sectional view showing an earset communication device of the present invention; Figs. 4A to 4C are views showing a microphone part of an earset communication device of the present invention; Fig. 5 is a view showing a mounting structure of a microphone part of an earset communication device of the present invention; Figs. 6A and 6B are sectional views showing a microphone part of an earset communication device of the present invention; Fig. 7 is a circuit diagram showing a circuit structure of a microphone part of an earset communication device of the present invention; Fig. 8 is a sectional view showing a sound guide part of an earset communication device of the present invention; Fig. 9A is a side view showing a sound guide part of an earset communication device of the present invention; Fig. 9B is a front view showing a sound guide part of an earset communication device of the present invention; Fig. 10 is a front view showing a sound guide part of an earset communication device of the present invention; Figs. 11A and 11B are sectional views showing a sound guide part of an earset communication device of the present invention; Fig. 12 is a sectional view showing an attachment part of an earset communication device of the present invention; Fig. 13 is a sectional view showing an earset communication device of the present invention; and Fig. 14 is a perspective view showing the name of each part of the ear.

### Best Modes for Carrying Out the Invention

An embodiment of the present invention is described hereinafter with reference to the drawings.

The embodiment of the present invention is described by referring to Fig. 14 showing each part of the human ear in addition to the figures showing the structure of a communication device or the like.

As shown in Fig. 1, an earset communication device 1 is used in combination with a mobile phone 40 as a main phone of the communication device 1. Instead of the mobile phone 40, the main phone of the communication device 1 may be various communication devices such as a fixed telephone and a telephone device using PC or PDA as platform. The functions relating to the communication between the main phone and the communication device 1 are substantially equal in the configuration using any of these devices.

As shown in Fig. 1, the communication device 1 has a circuit substrate 6, an antenna 9, and a microphone 30. The circuit substrate 6 has a signal circuit 23, a battery 8, a volume switch 10a, a power switch 10b, a communication switch 10, a speaker 11, and an LED 16. The signal circuit 23 has a transceiver/receiver circuit 23a and a power supply circuit 23b.

Each component of the communication device 1 operates by power supply from the battery 8.

The mobile phone 40 has a basic configuration 41, a second communication unit 42, and a second antenna 43. The basic configuration 41 has a communication circuit 44, a first antenna 45, a battery 46, a microphone 47, a speaker 48, a numeric keypad 49, and switches 50. The basic configuration 41 enables normal mobile phone functions. The communication circuit 44 of the basic configuration 41 includes a control circuit for controlling the mobile phone functions and a transceiver/receiver circuit for communicating with a base station. The second communication unit 42 is a unit to communicate with the communication device 1. The second antenna 43 is an antenna to communicate with the communication device 1.

The structure of the earset communication device 1 according to the embodiment of the invention is described below. In this example, in order to achieve the objects of handsfree and easy attachment addressed in the background art section, the communication device 1 of this embodiment is formed by using components as small and lightweight as possible to reduce size and weight. The communication device 1 uses a bone conduction microphone for the microphone 30 in consideration with usage variation and so on.

First, the appearance of the communication device 1 is described with reference to Figs. 2A and 2B. Fig. 2A is a view from the side apart from a user when the device is attached to the user. Fig. 2B is a view from the side of the user when the device is attached to the user.

As shown in Figs. 2A and 2B, the communication device 1 has a main body 2, a sound guide part 3, a microphone part 4, and a holding part 5. The main body 2 has two housings 2a and 2b. The sound guide part 3 has a housing 3a, and the microphone part 4 has a housing 4a. The main body housings 2a and 2b, the sound guide housing 3a, and the microphone housing 4a may be respectively made of polyamide resin, ABS resin, and elastomer resin and so on. The sound guide housing 3a may be formed of high specific gravity metal such as brass.

The microphone housing 4a needs to transmit minute vibration in a under surface 61a of cavum conchae 61 to a bone conduction microphone 30 in the microphone housing 4a. Therefore, the microphone housing 4a is made of hard and moisture-keeping material, and its surface is mirror finished so as to closely contact with the skin of the cavum conchae 61. Particularly, ABS resin is suitable as the moisture-keeping material since it is highly formable and low price.

The holding part 5 is made of elastic material such as 50 to 80 hardness rubber or polyvinyl. The holding part 5 is elastically displaceable in a deflected form. In the attachment state, the holding part 5 pinches an edge 65 of the cavum conchae 61 between a small diameter part bottom 4g and a large diameter part backside 4e to hold. Since the holding part 5 is elastically contacted with the edge 65 of the cavum conchae 61 in the secure holding state, a user can feel good fit. The holding part 5 may have a holding reinforcing part 51. The holding reinforcing part 51 allows reduction of the pinching space to enhance the stable attachment.

The specific structure of the communication device 1 is described hereinafter with reference to Figs. 3A and 3B. Fig. 3B is a sectional view along the line A-A' of the communication device 1 of Fig. 3A. As shown in Figs. 3A and 3B, the main body housing of the main body 2 is composed of an outer housing 2a and an inner housing 2b. The outer housing 2a is a case placed in the opposite side from a user's head when attached. A detachable battery cover for replacing a battery is placed at the bottom of the outer housing 2a. The inner housing 2b is a case placed in the side of a user's head when attached.

The sound guide part 3 protrudes from and is integrally formed with the main body 2. Specifically, the sound guide part 3 is formed to protrude from an upper part of the main body 2 at the user's side when the communication device 1 is attached to the user. The sound guide part 3 outputs sound, is attached to the cavum conchae of the user's ear and constitutes an earphone part which outputs sound to the cavum conchae.

The microphone part 4 is formed separately from the main body 2, and it is fitted into a microphone holder 15 placed in the inner housing 2b of the main body 2. The microphone part 4 is placed to protrude from the main body 2 below the sound guide part 3. The microphone part 4 and the sound guide part 3 are placed above and below with a minute interval. Thus, the sound guide part 3 and the microphone part 4 form a fork structure with respect to the main body 2.

Since the sound guide part 3 and the microphone part 4 do not directly contact with each other, it is possible to prevent microvibration by the sound passing through the sound guide part 3 from being transmitted to the microphone part 4. Further, the fork structure allows the sound guide housing 3a to be retained in place so as to transmit received sound to the external ear canal 64, thereby providing stable sound volume to users.

In the communication device 1, the front end part of the microphone housing 4a protruding from the inner housing 2a and the front end of the sound guide housing 3a are attached to the cavum conchae 61. The comprehensive outline of the attachment parts forms a vertically elongated oval shape so as to match with the inner shape of the cavum conchae 61 when attached.

The inner housing 2b of the main body 2 has the microphone holder 15 where the microphone housing 4a is fitted in. The microphone holder 15 has a concave shape so that the microphone housing 4a is fitted thereinto. The microphone holder 15 has an axis 15a which rotatably supports the microphone housing 4a.

The holding part 5 is placed in the main body 2 so as to extend obliquely downward in a tongue shape from the boundary between the main body 2 and the microphone part 4.

The components of the main body 2 of the communication device 1 are described hereinafter in detail.

As shown in Figs. 3A and 3B, the main body 2 has the circuit substrate 6, radio module 7, battery 8, antenna 9, communication switch 10, and speaker 11. These components are internally supported by being housed in the outer housing 2a and the inner housing 2b.

The radio module 7, battery 8, antenna 9, communication switch 10, speaker 11 and so on are mounted and electrically connected to the circuit substrate 6. Electronic circuits on the circuit substrate 6 are supplied with power from the battery 8 to perform various operations for communication. In this example, the radio module 7 and the speaker 11 are placed on the surface of the circuit substrate 6 at the user's side and the battery 8, the antenna 9, and the communication switch 10 are placed on the other side surface in the state where the communication device 1 is attached to a user.

The radio module 7 is Bluetooth (trademark of Bluetooth SIG. Inc.), for example. The radio module 7 is connected to the circuit substrate 6 and operates with power supply from the battery 8. The radio module 7 communicates with the mobile phone 40 as the base phone through the antenna 9 connected to the circuit substrate 6. The radio module 7 constitutes the transceiver/receiver circuit 23a shown in Fig. 1.

The battery 8 is coin-shaped and placed in the lower part of the circuit substrate 6. The battery 8 is electrically connected to the circuit substrate 6 through battery terminals 14a and 14b. The battery terminal 14a is bent in a convex shape toward the battery 8 so as to push the battery 8 to the circuit substrate 6 to ensure electrical connection. The battery 8 is thereby fixed between the battery terminals 14a and 14b.

The antenna 9 is a chip antenna, for example, and placed in the upper part of the circuit substrate 6 and in the vicinity of the communication switch 10. The antenna 9 is located in such a position that the speaker 11 is placed at the head of a user when the user wears the communication device 1.

The communication switch 10 is a multipoint switch having multifunction as shown in Fig. 3A. For example, the communication switch 10 functions as a volume switch 10a and a power switch 10b when starting and ending a call. The outer housing 2a has an LED 16 for informing a user of an incoming call to the base mobile phone.

The speaker 11 is connected to a sound output terminal (not shown) of the circuit substrate 6 and receives an electric signal from the radio module 7. The speaker 11 converts the received electric signal into sound audible to users and outputs it. The sound is output through an opening 11a made inside the main body 2. The speaker 11 is housed in the main body housings 2a and 2b and placed in the position apart from the microphone part 2 protruding from the main body 2. This ensures to prevent the microvibration generated by the speaker 11 from being transmitted to the microphone part 4.

The speaker 11 is, for example, a dynamic speaker composed of a yoke made of a permanent magnet and magnetic material forming its magnetic path and a moving part formed of a coil and a diaphragm. If it is the dynamic speaker, the speaker 11 generates vibration in the yoke as a counteraction to sound (action) which is aerial vibration. The vibration in the yoke vibrates parts and equipment attached to the speaker 11. The speaker 11 in the embodiment of this invention is attached to the circuit substrate 6 which has a heavy weight since various parts of the communication device 1 are attached thereto. Therefore, the weight of the circuit substrate 6 allows the vibration in the yoke to be attenuated as much as possible. It is thereby possible to suppress the vibration in the yoke.

The speaker 11 is covered with attenuating material, which is not shown, and fixed to the circuit substrate 6 through the attenuating material. It is thereby possible to suppress microvibration generated during operation of the speaker 11 and reduce transmission of microvibration to the microphone part 4 more effectively. The attenuating material is formed of a viscoelastic body such as gel with plastic base, for example.

Further, since the speaker 11 is housed in the main body 2, it is possible to freely select the shape of the sound guide housing 3a to be attached into the cavum conchae 61. This increases the freedom of the shape of the sound guide housing 3a and the microphone housing 4a to be fitted into the cavum conchae 61, thus providing more comfortable attachment.

The structure of the microphone part 4 is described hereinafter with reference to Figs. 4A to 4C. Fig. 4A is a plan view of the microphone housing 4a. Fig. 4B is a sectional view along line A-A' of Fig. 4A. Fig. 4C is a front view of the microphone housing 4a.

As shown in Fig. 4A, the microphone housing 4a protruding from the main body 2 is composed of the large diameter part 4b and the small diameter part 4c. The large diameter part 4b is the end part to touch the cavum conchae 61. The small diameter part 4c is the part continuous to the large diameter part 4b outward from the ear when attached.

The bone conduction microphone 30 is placed inside the large diameter part 4b of the microphone housing 4a. The structure of the bone conduction microphone 30 is detailed later. The large diameter part 4b and the small diameter part 4c are continuously integrated by a connection 4d.

The backside 4e of the large diameter part 4b contacts the under surface 61a of the cavum conchae 61 in the attached state. Thus, the connection 4d of the large diameter part 4b and the small diameter part 4c is connected smoothly to provide better contact with the under surface 61a of the cavum conchae 61.

As shown in Fig. 4B, the bottom surface 4f of the large diameter part 4b is bent in a convex shape toward the under surface 61a of the cavum conchae 61 when viewed along the external ear canal 64 in order to accurately detect minute vibration in contact with the under surface 61a of the cavum conchae 61 in the attached state. The contact area between the large diameter part bottom surface 4f and the under surface 61a of the cavum conchae 61 thereby increases to provide suitable contact. The bottom 4g of the small diameter part 4c may be also bent in a convex shape.

Two small diameter bases 4h protrude from the small diameter part 4c. The small diameter bases 4h are plate-like members placed substantially parallel to each other. The microphone housing 4a is fitted into the microphone holder 15 protruding from the inner housing 2b of the main body 2. As shown in Fig. 4C, the small diameter bases 4h which continue to the small diameter part 4c of the microphone housing 4a have an eyelet 4i.

The eyelet 4i is jointed to the axis 15a of the microphone holder 15 and the microphone housing 4a and the inner housing 2b of the main body 2 are fitted and jointed to each other. The microphone housing 4a is thereby flexibly movable for the vibration transmitted from the cavum conchae 61.

Further, the main body housing (inner housing 2b) may have a stopper 17 to prevent the microphone housing 4a from moving downward significantly so as to maintain suitable attachment. Fig. 5 shows a part of the structure of the communication device 1 having the stopper 17. The stopper 17 is placed to restrict the downward movement of the microphone housing 4a. The stopper 17 is integrally formed to protrude from the inner housing 2b. However, it does not necessarily protrude from the inner housing 2b. For example, it may be formed to avoid that the eyelet 4i and the axis 15a rotate with each other at a certain angle or above.

The microphone part 4 uses a bone conduction system and detects the sound vibration generated in the vocal chords and transmitted through the throat and head to reach the under surface 61a of the cavum conchae 61 with the bone conduction microphone 30 in the microphone housing 4a. In the microphone part 4 using the bone conduction system, the microphone housing 4a smoothly moves in synchronization with microvibration of the skin in the under surface 61a of the cavum conchae 61.

The bone conduction microphone 30 is housed inside the large diameter part 4b of the microphone housing 4a protruding from the main body 2. The structure of the bone conduction microphone 30 is described hereinafter with reference to Figs. 6A and 6B. Fig. 6A is a partly fracture sectional view showing the structure of the bone conduction microphone 30. Fig. 6B is a sectional view along the line A-A' of Fig. 6A.

As shown in Fig. 6A, a microphone substrate 35 where a field-effect transistor 34 or the like for signal processing is mounted is stored inside the small diameter part 4c of the microphone housing 4a. The microphone substrate 35 is connected to a piezoelectric element 32 by a signal line 33 and also connected to the circuit substrate 6 of the main body 2 by a signal terminal 35a.

A shield case 31 entirely covers the main components of the bone conduction microphone 30, the piezoelectric element 32, and the microphone substrate 35 with the field-effect transistor 34 or the like. It is thereby possible to maintain high signal/noise (S/N) ratio of the transmitted sound signal. The shield case 31 is made of conductive and magnetic material.

The shield case 31 is covered with the microphone housing 4a and protected from mechanical force from outside. The piezoelectric element 32 is supported and fixed in the shield case 31 and the shield case 31 is supported and fixed in the microphone housing 4a with a sufficiently high degree of coupling, thereby preventing attenuation of vibration passing through the supporting part.

As shown in Fig. 6B, the piezoelectric element 32 of the bone conduction microphone 30 is supported and fixed in the shape of cantilever at one end in the longitudinal direction of the large diameter part 4b of the microphone housing 4a. The piezoelectric element 32 which can freely vibrate is stored in the other end of the bone conduction microphone 30.

The piezoelectric element 32 is made of piezoelectric ceramics material such as PZT. As shown in Fig. 6B, electrodes 32a and 32b are respectively formed entirely on the upper and lower surfaces of the piezoelectric element 32. When the piezoelectric element 32 is distorted by external force, the voltage corresponding to the distortion occurs between the electrodes 32a and 32b. The generated electric signal is applied from the piezoelectric element 32 to the microphone substrate 35 through the signal line 33, and then from the signal terminal 35a to the microphone input terminal of the circuit substrate 6. Though not shown in Figs. 6A and 6B, the microphone input terminal corresponds to the microphone input terminal 24 of Fig. 1 .

Fig. 7 shows the circuit configuration of the bone conduction microphone 30. The electrode 32a of the piezoelectric element 32 is connected to the gate of the field-effect transistor 34 through the signal line 33. The electrode 32b is connected to the source of the field-effect transistor 34 through the shield case 31 and a ground pattern of the microphone substrate 35. The signal terminals 35a and 35b of the microphone substrate 35 are connected to the microphone input terminal (the microphone input terminal 24 of Fig. 1, though not shown in Fig. 7) of the communication device 1.

In this configuration, the sound signal detected by the piezoelectric element 32 of the bone conduction microphone 30 is transmitted from the antenna 9 of the communication device 1 to the mobile phone 40 as transmission sound. The mobile phone 40 receives the sound signal with the second antenna 43 and inputs the electric signal indicating the transmission sound to the basic configuration 41 through the second communication unit 42. The communication circuit 44 of the basic configuration 41 transmits the transmission sound as a transmission signal to a telephone device of the other party through the first antenna 45. The transmission signal is received by the telephone device of the other party via the base station and the communication network.

The structure to output the sound generated in the speaker 11 from the communication device 1 is described below. The communication device 1 of this invention does not directly output the sound generated in the speaker 11 but leads it to the external ear canal through a sound guide tube. This is described hereinafter in detail with reference to the drawings.

As shown in Fig. 8, the sound guide tube 12 is housed in the sound guide housing 3a. The sound guide tube 12 is made of flexible material such as 3 to 5 degree silicon rubber or elastomer resin. The sound guide tube 12 has a cylindrical shape.

One end of the sound guide tube 12 is connected to the opening 11a from which the speaker 11 outputs sound. The other end of the sound guide tube 12 extends to the vicinity of the end part 3b of the sound guide housing 3a. The sound guide tube 12 leads the sound generated by the speaker 11 to the vicinity of the external canal 64 of a user. The sound guided by the sound guide tube 12 is released at the entrance of the external canal 64 into the external canal 64 from the opening of the sound guide housing 3a, which is described later.

Even if the speaker 11 on the circuit substrate 6 of the main body 2 and the external ear canal 64 of the user are spatially separated from each other, it is possible to transmit the sound of the speaker 11 to the external ear canal 64 of the user through the sound guide tube 12.

As shown in Figs. 9A and 9B, the end part 3b of the sound guide housing 3a protruding from the main body 2 has openings 211 and 212. The openings 211 and 212 respectively consists of a plurality of holes or the like made in the sound guide housing 3a and are formed in the end part 3b of the sound guide housing 3a. As shown in Fig. 9A, the opening 211 has two openings 211a and 211b which are made in the left and right side surfaces of the end part 3b. As shown in Fig. 9B, the opening 212 has two openings 212a and 212b which are made in both left and right sides of the front surface of the end part 3b. Therefore, left or right whichever direction the sound guide tube 12 faces, it is possible to output the sound from either left or right opening of the openings 211 and 212 to the inside of the external ear canal 64.

As shown in Fig. 9A, a switch lever 13 for switching the facing direction of the sound guide tube 12 between the openings 211 and 212 is formed to protrude from the sound guide housing 3a. The switch lever 13 is connected to the sound guide tube 12 inside the sound guide housing 3a so as to change the direction of the sound guide tube 12 with respect to the inside of the external ear canal 64. The switch lever 13 is rotatably placed in the sound guide housing 3a. The switch lever 13 is located in such a position that it does not touch the skin of the ear when the communication device 1 is attached to the ear.

As shown in Fig. 10, if the switch lever 13 is turned to the direction A, the sound guide tube 12 faces toward the openings 211b and 212b in the sound guide housing 3a. On the contrary, if the switch lever 13 is turned to the direction B, the sound guide tube 12 faces toward the openings 211a and 212a in the sound guide housing 3a.

Generally, the relative positional relationship between the cavum conchae 61 and the external ear canal 64 are opposite in the human left and right ears. The communication device 1 of this invention switches the direction of the switch lever 13, thereby allowing the sound guide tube 12 to face toward the direction of the external ear canal 64 which is different between left and right. It is thereby possible to securely transmit the sound to the inside of the external ear canal 64 regardless of which ear.

As shown in Figs. 11A and 11B, the fixing part 22 may be placed to fix the switch lever 13 so that the direction of the switch lever 13 does not change improperly. Fig. 11A is a sectional view from the side of user's head when the communication device 1 is attached to the user. Fig. 11B is a sectional view from the above. As shown in Fig. 11A, the fixing part 22 is a convex member formed on the bottom surface inside the sound guide housing 3a. For example, if the switch lever 13 is turned to the direction A shown in Fig. 10, the fixing part 22 presses to fix the sound guide tube 12 from its right side so that the sound guide tube 12 does not move to the direction B. When the switch lever 13 is switched, the sound guide tube 12 passes above the fixing part 22 in contact therewith. Then, the fixing part 22 fixes the sound guide tube 12 from the opposite side, which is the left side of the sound guide tube 12.

The fixing part 22 may not fix the sound guide tube 12 itself but may be formed on the sound guide housing 3a to fix the switch lever 13 and thereby fix the sound guide tube 12.

The way the communication device 1 having the above structure is attached to the ear is described below. First, if a user wears the communication device 1 at the left ear, the switch lever 13 is turned to the position A of Fig. 10 so that the sound guide tube 12 faces upward in Fig. 8. If the user wears the communication device 1 at the right ear, the switch lever 13 is turned to the position B of Fig. 10 so that the sound guide tube 12 faces downward in Fig. 8.

Fig. 12 shows the state where the communication device is attached to the user's ear. As shown in Fig. 12, in the use position with the communication device 12 being attached, the large diameter part 4b having the bone conduction microphone 30 of the microphone housing 4a and the end part 3b having the openings 211 and 212 of the sound guide housing 3a are fitted into the cavum conchae 61 of the user's head. The large diameter bottom surface 4f is in contact with the under surface 61a of the cavum conchae 61. Oh the other hand, the end part 3b of the sound guide housing 3a is in contact with the upper surface 61b of the cavum conchae 61.

When attached, the large diameter part 4b of the microphone housing 4a and the end part 3b including the openings 211 and 212 of the sound guide housing 3a are fitted and attached suitably to the space formed in the vicinity of the cavum conchae 61, tragus 62, antitragus 63, and the opening of the external canal 64. Further, when the communication device 1 is attached, the main body 2 is placed apart from the user's head and the cavum conchae 61 and located on the external cheek surface by extending outward of the cavum conchae 61.

The holding part 5 holds the edge 65 of the cavum conchae 61 in the space formed by the small diameter part bottom 4g of the microphone housing 4a and the large diameter bottom surface 4f of the large diameter part backside 4e. The holding part 5 allows stable attachment of the communication device 1 to the ear. Further, since the tragus 62 and the antitragus 63 support the large diameter bottom surface 4f, it is possible to stably attach the communication device 1.

The attachment of the communication device 1 only requires inserting the large diameter part 4b and the end part 3b of the sound guide housing 3a into the cavum conchae 61, which takes about 1 second or less. Further, the communication device 1 can be attached with one hand, thus allowing easy attachment.

The structural improvement in the communication device 1 of this invention to overcome the problem of electromagnetic wave is described below.

As shown in Figs. 3A and 3B, the communication device 1 has a structure which places only the microphone part 4 and the openings 211 and 212 of the sound guide housing 3a inside the cavum conchae 61 of a user and places the circuit substrate 6 having a transceiver/receiver circuit or the like in the position apart from the cavum conchae 61 of the user's head, which is the outer cheek surface of the cavum conchae 61.

Particularly, the antenna 9 which most generates electromagnetic wave is located in the outer housing 2a apart from the body in order to separate it from the body (head) of the user as far as possible. Further, the antenna 9 is placed on the surface of the circuit substrate 6 which is apart from the user's head. It is also possible to place the antenna 9 above the outer housing 2a. This arrangement reduces the effect of electromagnetic wave on the user.

Further, placing the antenna 9 in the outer housing 2a eliminates the restriction of the shape and size, thus significantly increasing design freedom.

As shown in Figs. 3A and 3B, in the communication device , switches such as the communication switch 10, the volume switch 10a, and the power switch 10b are placed in the vicinity of the outer edge of the cavum conchae 61 held by the holding part 5, which is located in the relatively upper part when attached to the user since those switches provide low frequencies, thereby stabilizing the operation and attachment.

As shown in Figs. 3A and 3B, the battery 8 is fixed to the circuit substrate 6 by the power supply terminals 14a, 14b, and so on and placed between the outer housing 2a of the main body 2 and the circuit substrate 6 at the lower part of the circuit substrate 6, which is at the lower part of the main body 2. This structure further lowers the center of gravity of the communication device 1. Specifically, the center of gravity of the battery 8 is located lower than the attachment bearing constituted of the small diameter base and the attachment bearing member of the microphone housing 4a and the large diameter part backside of the microphone housing 4a in the attachment position.

As shown in Fig. 13, the battery 8 may be placed in the user's head side. Since the battery 8 is located between the antenna 9 and the user's head in this structure, the electromagnetic wave generated in the antenna 9 is attenuated by the battery 8 to reduce the amount which reaches the user's head.

The transmitting and receiving operation of the communication device 1 and the mobile phone 40 of the present invention is described hereinafter.

The receiving operation is described first.

When the mobile phone 40 receives a phone call from the outside, the mobile phone 40 first receives a call signal. Specifically, the mobile phone 40 receives an electric wave signal containing a call signal transmitted from the base station with the first antenna 45 of the basic configuration 41. Then, the mobile phone 40 converts it into an electric signal containing the call signal in the first antenna 45 and transmits it to the transceiver/receiver circuit of the communication circuit 44 to perform receiving operation in the transceiver/receiver circuit.

Further, the transceiver/receiver circuit of the communication circuit 44 transmits the call signal to the antenna 9 of the communication device 1 through the second communication unit 42 and the second antenna 43. If the communication device 1 is previously set to a communication enable state, the communication device 1 receives the electric wave signal containing the call signal transmitted from the second antenna 43 of the mobile phone 40. The communication device 1 converts the received electric wave signal into an electric signal containing the call signal in the antenna 9 and inputs it to the transceiver/receiver circuit 23a.

The transceiver/receiver circuit 23a detects the call signal and the speaker 11 sounds a ringtone to a user. The user hears the ringtone and recognizes the call. If the user desires to talk, he/she inserts the communication device 1 into the cavum conchae 61 and turns on the communication switch 10. The transceiver/receiver circuit 23a of the communication device 1 and the transceiver/receiver circuit of the communication circuit 44 of the mobile phone 40 thereby operate to establish a communication line with the other party to enable communication.

If the communication line with the other party is established, the sound signal transmitted from the other party passes through the same path as the call signal described above and is output from the speaker 11 of the communication device 1. The sound signal received via the base station, public line and so on are transmitted to the communication device 1 through the first antenna 45, the communication circuit 44, the second communication unit 42, and the second antenna 43.

In the communication device 1, the sound signal transmitted from the mobile phone 40 is received by the transceiver/receiver circuit 23a through the antenna 9, converted from electricity to sound in the speaker 11, and output from the speaker 11 as sound. The output sound then passes through the sound guide tube 12 and output to the external canal 64 of the user from the openings 211 and 212 of the sound guide housing 3a for the user to hear.

On the other hand, the voice of the user is detected by the bone conduction microphone in the microphone housing 4a attached to the cavum conchae 61. Since the cavum conchae 61 and the microphone housing 4a are in contact with each other when the communication device 1 is attached to the ear, if the user produces sound for talk, the vibration in the vocal cord accompanying the sound production is transmitted through the throat and head to reach the cavum conchae 61.

The vibration which has reached the cavum conchae 61 is transmitted to the built-in bone conduction microhone 30 through the rotatable microphone housing 4a shown in Fig. 5. When the vibration is transmitted from the microphone housing 4a to the bone conduction microphone 30, the entire bone conduction microphone 30 vibrates. At the same time, the piezoelectric element 32 in the shield case 31 also vibrates and generates an electric signal corresponding to the vibration at the electrodes 32a and 32b. It then transmits the signal corresponding to the vibration to the field-effect transistor 34 through the connected signal line 33 or the like.

The field-effect transistor 34 receives the signal corresponding to the vibration, performs a given conversion process, and transmits it as a detected sound signal to the microphone input terminal 24 shown in Fig. 1 through the signal terminal 35a or the like.

As shown in Fig. 1, the signal circuit 23 of the communication device 1 transmits the input signal to the microphone input terminal 24 through the antenna 9 to the second antenna 43 of the mobile phone 40. The electric wave signal received by the antenna 43 is then transmitted to the mobile phone 40 through the second communication unit 42. The mobile phone 40 receives the sound signal from the communication device 1 and transmits it through the first antenna 45 to a telephone or the like of the other party via the base station or the like. The communication is thereby established.

The transmitting operation is described now.

When making a call to the outside using a telephone system having the communication device 1 of this invention shown in Fig. 1, a user calls for the other communication party using the basic function of the mobile phone 40 and talks using the communication device 1. The communication method is detailed below.

The communication device 1 of the embodiment of this invention is a small cordless unit having the functions of a handset and it has no dial function. Thus, the mobile phone 40 is used to make a call.

When making a call, the communication device 1 is attached to the cavum conchae 61, and the numeric keypad 49, which is the basic function of the mobile phone 40, is used to call the other party. The beep or the like is transmitted through the second communication unit 42 and the second antenna 43 of the mobile phone 40, then through the antenna 9 and the signal circuit 23 of the communication device 1, and converted from electricity to sound by the speaker 11. It is then transmitted through the sound guide tube 12 and output from the openings 211 and 212 of the sound guide housing 3a to the opening of the external canal 64 of the user. Since the user can hear the sound output from the openings 211 and 212, he/she can start talking immediately when the other party answers the phone or the like.

When making a call, the components of the device operate in the same way as when receiving the call, and a detailed description is thus omitted.

Though the user attaches the communication device 1 to the cavum conchae 61 before dialing in the above example, the user may attach it after dialing. However, if the attachment delays, a time to start talking delays accordingly, which brings discomfort to the other party.

As described in the foregoing, in the communication device 1 of the embodiment of this invention, the speaker 11 is placed in the main body 2 and the speaker 11 and the microphone part 4 are not close to each other. Since the speaker 11 and the microphone part 4 are separated, it is possible to reliably prevent microvibration generated by the sound output of the speaker 11 from being transmitted to the microphone part 4.

Further, the sound guide housing 3a protruding from the main body 2 has the sound guide tube 12 which serves as a guiding path of the sound output from the speaker 11. It is thereby possible to reliably transmit the sound output from the speaker 11 into the external canal 64 even if the speaker 11 of the main body 2 and the external canal 64 are separated form each other.

Furthermore, the sound guide tube 12 has the switch lever 13 for switching its direction. It is thereby possible to easily switch the direction of the sound guiding path in accordance with the left and right ears. In addition, the fixing part 22 for fixing the sound guide tube 12 is placed. It is thereby possible to prevent the sound guide tube 12 from moving after switching the switch lever 13, thus surely preventing a change in the direction of the guiding path.

The communication device 1 can be easily attached upon usage simply by inserting the large diameter part 4b of the microphone housing 4a and the end part 3b of the sound guide housing 3a into the cavum conchae 61. The attaching time is thereby reduced greatly to allow a user to start talking smoothly when receiving a call.

Though the communication device 1 of this embodiment is configured to wirelessly communicate with the mobile phone 40, it can communicate with the mobile phone 40 through a signal line. In this case also, by placing the speaker 11 in the main body 2 and arranging the speaker 11 and the microphone part 4 apart from each other, it is possible to reliably prevent microvibration generated by the speaker 11 from being transmitted to the microphone part 4.

The effect of the electromagnetic wave in the communication device 1 during communication using the communication device 1 of the invention is described hereinafter.

During the operation of the communication device 1 of the invention, electric wave is emitted from the antenna 9 of the communication device 1. At this time, in the communication device 1 of the invention, the parts to be attached to the cavum conchae 61 of the user's head during usage are the large diameter part 4b at the end of the microphone housing 4a and the part in the vicinity of the openings 211 and 212 of the sound guide housing 3a.

The antenna 9 is placed in the position of the communication device 1 farthest from the head. It is placed in the outer housing 2a, which is the position of the main body 2 apart from the head.

Further, in the structure as shown in Fig. 13, the battery 8 is placed between the antenna 9 and the head, and the electric wave emitted from the antenna 9 to the direction of the head hits against the case of the battery 8 made of conductive material and is released again into the space through the case. Since the transmission path of the electric wave is shortest, the electric wave is largely released from the side surface or the like of the battery, and the energy from the antenna 9 which penetrates through the battery 8 and further through the head is reduced. By using this structure for the communication device 1, it is possible to reduce the effect of the electromagnetic wave on the head.

As described in the foregoing, the communication device 1 of the present invention can be attached easily and stably upon usage simply by the simple process of inserting the large diameter part 4b of the microphone housing 4a and the end part 3b of the sound guide housing 3a into the cavum conchae 61. The time required for the process is significantly shorter compared to conventional techniques, and it is possible to attach the communication device 1 of the invention and start talking smoothly when receiving a call.

Further, the effect of electromagnetic wave on the head can be reduced during use by placing the antenna suitably.

Use of the communication device 1 of this structure provides users with advantages such as easy attachment, handsfree functions and smooth communication by attaching it after receiving a call. It also provides users with an advantage of reduction in electromagnetic wave during call.

The present invention can provide an earset communication device which reliably prevents vibration from being transmitted to the microphone part.

Further, the present invention can provide an earset communication device which reduces the effect of electromagnetic wave.

### Industrial Applicability

The earset communication device of the present invention may be used in combination with a mobile phone as a sound input/output unit of the mobile phone, for example.

## Claims

1. An earset communication device attached to a human ear, comprising:
a main body having a sound output unit outputting sound inside;
a sound guide part protruding from the main body, attached to a cavum conchae of the ear, and guiding the sound output from the sound output unit to the cavum conchae; and
a microphone part protruding from the main body, inserted into the cavum conchae in contact therewith, and having a bone conduction sound detection unit detecting bone conduction sound transmitted to the cavum conchae.

2. The earset communication device of claim 1, wherein the microphone part protrudes from the main body in continuously to the sound guide part in a fork shape.

3. The earset communication device of claim 1, wherein the sound guide part has a sound guide tube guiding the sound output from the sound output unit to the cavum conchae.

4. The earset communication device of claim 3, wherein the sound guide part has a switch unit switching a direction of a guiding path through which the sound guide tube guides the sound.

5. The earset communication device of claim 4, wherein the sound guide part has a fixing unit fixing a direction of the guiding path.

6. The earset communication device of claim 1, wherein the microphone part is rotatably connected to the main part.

7. The earset communication device of claim 1, wherein the sound output unit is fixed to a substrate where an electronic component is mounted.

8. The earset communication device of claim 7, wherein a battery is mounted to the substrate.

9. The earset communication device of one of claims 1 to 8, wherein the main body has a communication circuit and an antenna for radio communication with a separated base unit.

10. An earset communication device attached to a human ear, comprising:
a main body;
an earphone part protruding from the main body, attached to a cavum conchae of the ear, and outputting sound to the cavum conchae; and
a microphone part protruding from the main body, inserted into the cavum conchae in contact therewith, and having a bone conduction sound detection unit detecting bone conduction sound transmitted to the cavum conchae,
wherein the microphone part is rotatably connected to the main body.

11. The earset communication device of claim 10, wherein the microphone part protrudes from the main body in continuously to the earphone part in a fork shape.

12. The earset communication device of claim 10, further comprising a stopper restricting rotation of the microphone part.

13. An earset communication device attached to a human ear, comprising:
a main body having an electronic circuit substrate for radio communication;
an earphone part protruding from the main body, attached to a cavum conchae of the ear, and outputting sound to the cavum conchae; and
a microphone part protruding from the main body, inserted into the cavum conchae in contact therewith, and detecting bone conduction sound transmitted to the cavum conchae.

14. The earset communication device of claim 13, wherein the main body further comprises a battery supplying power to the electronic circuit substrate, and the battery is placed between the electronic circuit substrate and a head of a user in a state where the communication device is attached to the user.

15. The earset communication device of claim 13, wherein the main body further comprises a speaker, and the speaker is fixed to the electronic circuit substrate through attenuating material.

16. An earset communication device attached to a human ear, comprising:
a main body having an antenna for radio communication;
an earphone part protruding from the main body, attached to a cavum conchae of the ear, and outputting sound to the cavum conchae; and
a microphone part protruding from the main body, inserted into the cavum conchae in contact therewith, and detecting bone conduction sound transmitted to the cavum conchae.

17. The earset communication device of claim 16, wherein the main body comprises a housing, and the antenna is placed in the housing located apart from a head of a user in a state where the communication device is attached to the user.

18. The earset communication device of claim 16, wherein the main body further comprises a battery, and the battery is placed between the antenna and a head of a user in a state where the communication device is attached to the user.

19. The earset communication device of one of claims 14 to 18, wherein the battery is housed in a lower part of the main body in a state where the communication device is attached to a user.
